# FASCICULE DE BREVET EUROPEEN

(11) **EP 1 864 862 B1**
(45) Date de publication et mention de la délivrance du brevet: **14.04.2010**
(21) Numéro de dépôt: 07290717.3
(22) Date de dépôt: 08.06.2007
(51) Int. Cl.: B60R 5/04

(54) **Cache bagages comprenant une bavette formée d'une armature flexible tendant une housse**
Gepäckabdeckung bestehend aus einem Kragen aus einer flexiblen Halterung, die einen Überzug spannt
Luggage concealing device comprising a flap made up of a flexible framework spreading a cover

(30) Priorité: 09.06.2006 FR 0605174
(43) Date de publication de la demande: 12.12.2007
(73) Titulaire: Centre d'etude et de recherche pour l'automobile (CERA), 51100 Reims (FR)
(72) Inventeur: Montagne, Frédéric, 51150 Tours sur Marne (FR)
(74) Mandataire: Sayettat, Julien Christian

(56) Documents cités:
- EP-A- 1 655 175
- DE-A1- 10 222 064
- DE-A1- 10 301 166
- DE-C1- 19 707 676
- US-A- 5 584 523

## Description

L'invention concerne un cache bagages de véhicule automobile.

Il est connu de réaliser un cache bagages de véhicule automobile, ledit cache bagages comprenant un moyen de recouvrement, tel qu'un rideau associé à un dispositif d'enroulement ou un store à palettes repliables, et une bavette de finition associée le long du bord avant ou arrière dudit moyen. Une telle bavette est généralement réalisée à partir d'un support rigide, par exemple à base de bois aggloméré, ledit support pouvant être revêtu d'un revêtement d'aspect, par exemple à base de textile collé sur ledit support.

Une telle bavette présente un poids important, une faculté à transmettre les nuisances sonores du fait de sa rigidité, et elle ne peut en outre présenter de grandes dimensions sous peine d'être sujette à des déformations dues aux fluctuations de température, d'humidité, etc.... auxquelles elle est soumise au cours de son utilisation. En outre, la rigidité de la bavette peut entraîner, sous l'effet d'une pression exercée par l'utilisateur, une rupture de ses moyens d'appui sur son environnement.

L'invention a pour but de palier ces inconvénients en proposant un cache bagages pourvu d'une bavette flexible, allégée, atténuant la transmission des nuisances sonores, dont les dimensions peuvent être importantes sans risque de variations dimensionnelles au cours de son utilisation, et présentant une solidité accrue.

A cet effet, et selon un premier aspect, l'invention propose un cache bagages de véhicule automobile, ledit cache bagages comprenant un moyen de recouvrement et une bavette de finition associée le long d'un bord dudit moyen, ladite bavette comprenant une armature flexible de mise sous tension et une housse d'aspect, ladite armature étant insérée dans ladite housse de sorte à la tendre.

De la sorte, on obtient une bavette légère, dont la flexibilité permet d'atténuer la transmission des nuisances sonores, dont les dimensions ne sont pas limitées par des contraintes de déformabilité au cours du temps, et de solidité renforcée.

Dans cette description, les termes de positionnement dans l'espace (avant, arrière, supérieur, inférieur,...) sont pris en référence au cache bagages monté dans le véhicule.

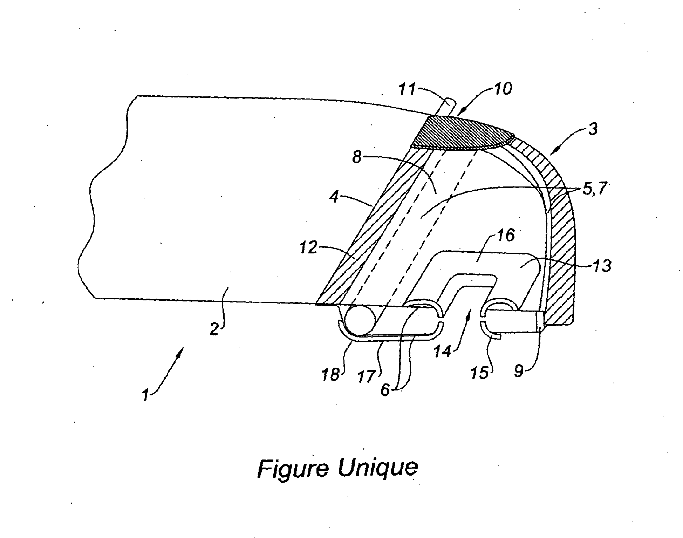

D'autres particularités et avantages de l'invention apparaîtront dans la description qui suit, faite en référence à la figure jointe qui est une vue coupée en perspective partielle et en transparence (pointillés) d'un cache bagages selon un mode de réalisation de l'invention.

En référence à la figure, on décrit à présent un cache bagages 1 de véhicule automobile, ledit cache bagages comprenant un moyen de recouvrement 2, sous forme de rideau, associé le long de son bord avant à un dispositif d'enroulement non représenté, et une bavette de finition 3 associée le long du bord arrière 4 dudit moyen, ladite bavette comprenant une armature 5 flexible de mise sous tension et une housse 6 d'aspect, par exemple à base de textile cousu, non tissé, moquette, textile enduit de plastique, etc....ladite armature étant insérée dans ladite housse de sorte à la tendre.

Selon la réalisation représentée, l'armature 5 est sous forme d'un cadre périphérique 7 prenant appui contre la périphérie de la housse 6 de sorte à la tendre.

Selon la réalisation représentée, le cadre périphérique 7 comprend un élément linéaire 8 s'étendant le long du bord arrière 4 du moyen de recouvrement 2 et un élément courbe 9 s'étendant à distance dudit bord, les extrémités dudit élément courbe étant associées aux extrémités dudit élément linéaire au moyen de pièces d'association 10, réalisées par exemple à base de plastique moulé.

Selon la réalisation représentée, l'élément courbe 9 est formé d'une bande métallique flexible recourbée, dont la largeur correspond à l'épaisseur de la bavette 3, et l'élément linéaire 8 d'un tube métallique.

En variante non représentée, l'armature 5 peut être à base de matière plastique, ce qui peut permettre son allègement.

Selon la réalisation représentée, chaque pièce d'association 10 comprend un moyen 11 d'accrochage et/ou de guidage, sous forme d'ergot, destiné à coopérer avec un moyen complémentaire non représenté prévu dans le compartiment à bagages.

Selon une réalisation non représentée, le cadre périphérique 7 peut être formé d'un fil métallique refermé sur lui même.

Selon la réalisation représentée, la housse 6 comprend un rebord saillant 12, la bavette 3 étant associée au moyen de recouvrement 2 par association dudit rebord sur le bord arrière 4 dudit moyen, par exemple par soudage ou collage.

Selon la réalisation représentée, le cache bagages 1 comprend en outre une poignée de préhension 13 du moyen de recouvrement 2, ladite poignée étant fixée sur l'armature 5 et étant par exemple à base de plastique moulé.

La poignée 13 est disposée sensiblement au centre de l'armature 5, un orifice 14 étant prévu dans les parois de la housse 6 à l'aplomb de ladite poignée, ladite poignée comprenant un cadre inférieur 15 et un cadre supérieur 16, lesdits cadres étant associés l'un à l'autre, par exemple par emboîtement ou vissage, de sorte à serrer la périphérie desdits orifices et à permettre le passage d'une main à travers lesdits orifices, ledit cadre inférieur étant pourvu d'une excroissance 17 dont l'extrémité libre 18 est fixée sur l'armature 5, ici sur le tube 8, par exemple par vissage.

## Revendications

1. Cache bagages (1) de véhicule automobile, ledit cache bagages comprenant un moyen de recouvrement (2) et une bavette de finition (3) associée le long d'un bord (4) dudit moyen, ledit cache bagages étant **caractérisé en ce que** ladite bavette comprend une armature (5) flexible de mise sous tension et une housse (6) d'aspect, ladite armature étant insérée dans ladite housse de sortie. à la tendre.

2. Cache bagages selon la revendication 1, l'armature (5) comprenant un cadre périphérique (7) prenant appui contre la périphérie de la housse (6) de sorte à la tendre.

3. Cache bagages selon la revendication 2, le cadre périphérique (7) comprenant un élément linéaire (8) s'étendant le long d'un bord (4) du moyen de recouvrement (2), et un élément courbe (9) s'étendant à distance dudit bord, les extrémités dudit élément courbe étant associées aux extrémités dudit élément linéaire au moyen de pièces d'association (10).

4. Cache bagages selon la revendication 3, l'élément courbe (9) étant formé d'une bande métallique flexible recourbée et l'élément linéaire (8) d'un tube métallique.

5. Cache bagages selon l'une des revendications 3 ou 4, chaque pièce d'association (10) comprenant un moyen (11) d'accrochage et/ou de guidage destiné à coopérer avec un moyen complémentaire prévu dans le compartiment à bagages.

6. Cache bagages selon la revendication 2, le cadre périphérique (7) étant formé d'un fil métallique refermé sur lui même.

7. Cache bagages selon l'une quelconque des revendications 1 à 6, la housse (6) comprenant un rebord saillant (12), la bavette (3) étant associée au moyen de recouvrement (2) par association dudit rebord sur un bord (4) dudit moyen.

8. Cache bagages selon l'une quelconque des revendications 1 à 7, ledit cache bagages comprenant en outre une poignée (13) de préhension du moyen de recouvrement (2), ladite poignée étant fixée sur l'armature (5).

9. Cache bagages selon la revendication 8, la poignée (13) étant disposée sensiblement au centre de l'armature (5), un orifice (14) étant prévu dans les parois de la housse (6) à l'aplomb de ladite poignée, ladite poignée comprenant un cadre inférieur (15) et un cadre supérieur (16), lesdits cadres étant associés l'un à l'autre de sorte à serrer la périphérie desdits orifices et à permettre le passage d'une main à travers lesdits orifices, ledit cadre inférieur étant pourvu d'une excroissance (17) dont l'extrémité libre (18) est fixée sur l'armature (5).

## Claims

1. Luggage cover device (1) for motor vehicle, said luggage cover device comprising a means of covering (2) and a finishing flap (3) associated along an edge (4) of said means, said luggage cover device being **characterised in that** said flap comprises a flexible framework (5) for stretching and a cover (6) for appearance, said framework being inserted into said cover in such a way as to stretch it.

2. Luggage cover device according to claim 1, the framework (5) comprising a peripheral frame (7) pressing against the periphery of the cover (6) in such a way as to stretch it.

3. Luggage cover device according to claim 2, the peripheral frame (7) comprising a linear element (8) extending along an edge (4) of the means of covering (2), and a curved element (9) extending at a distance from said edge, the ends of said curved element being associated with the ends of said linear element by means of association members (10).

4. Luggage cover device according to claim 3, the curved element (9), being formed of a curved flexible metal strip and the linear element (8) of a metal tube.

5. Luggage cover device according to one of claims 3 or 4, each association member (10) comprising a means (11) for fastening and/or guiding intended to cooperate with an additional means provided in the luggage compartment.

6. Luggage cover device according to claim 2, the peripheral frame (7) being formed of a metal wire closed on itself.

7. Luggage cover device according to any of claims 1 to 6, the cover (6) comprising a projecting edging (12), the flap (3) being associated to the means of covering (2) by association of said edging on an edge (4) of said means.

8. Luggage cover device according to any of claims 1 to 7, said luggage cover device further comprising a handle (13) for grasping the means of recovering (2), said handle being fixed on the framework (5).

9. Luggage cover device according to claim 8, the handle (13) being arranged substantially in the centre of the framework (5), an orifice (14) being provided in the walls of the cover (6) in line with said handle, said handle comprising a lower frame (15) and an upper frame (16), said frames being associated one in relation to the other in such a way as to tighten the periphery of said orifices and to allow for the passage of a hand through said orifices, said lower frame being provided with a protuberance (17) of which the free end (18) is fixed on the framework (5).

## Patentansprüche

1. Gepäckabdeckung (1) für Kraftfahrzeuge, wobei die Gepäckabdeckung ein Abdeckmittel (2) und einen dazugehörigen Randstreifen (3) an einem Rand .(4) des Mittels entlang umfasst, wobei die Gepäckabdeckung **dadurch gekennzeichnet ist, dass** der Streifen eine biegsame Aufspannarmierung (5) und eine Außenhülle (6),
wobei die Armierung in die Hülle eingefügt wird, um diese aufzuspannen.

2. Gepäckabdeckung nach Anspruch 1, wobei die Armierung (5) einen Umfangsrahmen (7) umfasst, der sich am Umfang der Hülle (6) abstützt, um diese aufzuspannen.

3. Gepäckabdeckung nach Anspruch 2, wobei der Umfangsrahmen (7) ein geradliniges Element (8), das sich an einem Rand (4) des Abdeckmittels (2) entlang erstreckt, und ein gebogenes Element (9), das sich von dem Rand beabstandet erstreckt, umfasst, wobei die Enden des gebogenen Elements mit den Enden des geradlinigen Elements mittels Verbindungsstücken (10) verbunden sind.

4. Gepäckabdeckung nach Anspruch 3, wobei das gebogene Element (9) aus einem umgebogenen biegsamen Metallband und das geradlinige Element (8) aus einer Metallröhre gebildet ist.

5. Gepäckabdeckung nach einem der Ansprüche 3 oder 4, wobei jedes Verbindungsstück (10) ein Aufhäng- und/oder Führungsmittel (11) umfasst, das dazu gedacht ist, mit einem passenden Mittel zusammenzuwirken, dass in dem Kofferraum bereitgestellt wird.

6. Gepäckabdeckung nach Anspruch 2, wobei der Umfangsrahmen (7) aus einem in sich geschlossenen Metalldraht gebildet ist.

7. Gepäckabdeckung nach einem der Ansprüche 1 bis 6, wobei die Hülle (6) eine vorspringende Einfassung (12) umfasst, wobei der Streifen (3) mit dem Abdeckmittel (2) durch Verbindung der Einfassung auf einem Rand (4) des Mittels verbunden ist.

8. Gepäckabdeckung nach einem der Ansprüche 1 bis 7, wobei die Gepäckabdeckung ferner einen Haltegriff (13) des Abdeckmittels (2) umfasst, wobei der Griff an der Armierung (5) befestigt ist.

9. Gepäckabdeckung nach Anspruch 8, wobei der Griff (13) im Wesentlichen in der Mitte der Armierung (5) angeordnet ist, wobei eine Öffnung (14) in den Wänden der Hülle (6) lotrecht zum Griff bereitgestellt wird, wobei der Griff einen unteren Rahmen (15) und einen oberen Rahmen (16) umfasst, wobei die Rahmen miteinander verbunden sind, um den Umfang der Öffnungen einzuklemmen und den Durchgang einer Hand durch die Öffnungen zu ermöglichen, wobei der untere Rahmen mit einer Ausstülpung ('17) versehen ist, deren freies Ende (18) an der Armierung (5) befestigt ist.
